# EUROPEAN PATENT APPLICATION

(11) **EP 4 723 257 A1**
(43) Date of publication of application: **08.04.2026**
(21) Application number: 23741436.2
(22) Date of filing: 29.05.2023
(51) Int. Cl.: H01M 10/04, H01M 50/207

(54) **PRESSING DEVICE FOR A BATTERY CELL STACK**

(71) Applicant: Battbelt S.L., 20500 Arrasate-Mondragon (ES)
(72) Inventor: CABELLO ULLOA, Mario Javier, 20500 ARRASATE-MONDRAGON (GIPUZKOA) (ES); ZURBITU GONZALEZ, Javier, 20500 ARRASATE-MONDRAGON (GIPUZKOA) (ES); REMIREZ JAUREGUI, Adrian, 20500 ARRASATE-MONDRAGON (GIPUZKOA) (ES); USABIAGA KARRERA, Maider, 20500 ARRASATE-MONDRAGON (GIPUZKOA) (ES)
(74) Representative: Galbaian S.Coop.
(86) International application number: PCT/ES2023/070350
(87) International publication number: WO 2024/246373

(57) **Abstract**

Pressing device for a battery cell stack (10) comprising a plurality of battery cells (11) of the prismatic type or of the pouch type, the pressing device (1) comprising a first pressure plate (2) and a second pressure plate (3) configured to be arranged at each end of the battery cell stack (10), and pressure elements (4) fixed to the first pressure plate (2) and to the second pressure plate (3) manufactured from a shape memory alloy and kept at a temperature greater than the final transformation temperature of the austenitic phase (A_{f}) of the alloy, such that the pressing device (1) is expanded with an increase in the thickness of the battery cells (11) and is compressed with a decrease in the thickness of the battery cells (11).

## Description

### TECHNICAL FIELD

The present invention relates to pressing devices for battery cell stacks.

### PRIOR ART

Energy storage systems made up of a plurality of battery cells arranged adjacent to one another forming a stack are known today. However, it is known that battery cells tend to change in thickness due to different factors such as temperature, state of charge, or aging. Exerting pressure on the battery cells forming the cell stack is also known, given that the pressure exerted on said cells directly influences the efficiency and degradation thereof, such that the more homogeneous the pressure exerted on the battery cells is throughout their life cycle, the better their behavior and the less their degradation will be.

DE102010012930A1 describes a battery with a stack of substantially flat unitary battery cells. The battery cells are arranged between two plates attached to one another by means of tensioning devices having at least one elastic element, arranged in the stacking direction. The tensioning devices are configured as tie rods, each tie rod comprising a spring and a pretensioning element. The battery cells can be manufactured with lithium-ion technology. However, the tensioning devices do not exert a constant force on the battery cells, said force is variable and proportional to the expansion of the spring of said tensioning devices at any given time.

### DISCLOSURE OF THE INVENTION

The object of the invention is to provide a pressing device, as defined in the claims.

The pressing device of the invention is a pressing device for a battery cell stack comprising a plurality of battery cells of the prismatic type or of the pouch type. The pressing device comprises a first pressure plate and a second pressure plate configured to be arranged at each end of the battery cell stack, the plurality of battery cells being arranged stacked between the first pressure plate and the second pressure plate, and pressure elements fixed to the first pressure plate and to the second pressure plate, such that the distance between the first pressure plate and the second pressure plate may be variable. The pressure elements are manufactured from a shape memory alloy and kept at a temperature greater than the final transformation temperature of the austenitic phase (A_{f}) of the shape memory alloy, such that the pressing device is expanded with an increase in the thickness of the battery cells and is compressed with a decrease in the thickness of the battery cells.

**In** a second aspect, the invention also relates to a pressing device 1 for a battery cell stack 10 comprising a plurality of battery cells 11 of the prismatic type or of the pouch type. The pressing device 1 comprises a first pressure plate 2 and a second pressure plate 3 configured to be arranged at each end of the battery cell stack 10, the plurality of battery cells 11 being arranged stacked between the first pressure plate 2 and the second pressure plate 3, and pressure elements 4, 5 fixed to the first pressure plate 2 and to the second pressure plate 3, such that the distance between the first pressure plate 2 and the second pressure plate 3 may be variable. The pressure elements 4, 5 are manufactured from a shape memory alloy and kept at a temperature lower than the final transformation temperature of the austenitic phase (A_{f}) of the shape memory alloy, such that the pressing device 1 is expanded with an increase in the thickness of the battery cells 11 and is compressed when the temperature of the pressure elements 4, 5 increases.

In a third aspect, the invention also relates to a method of monitoring the charge level of a battery. The battery comprises a battery cell stack comprising a plurality of battery cells of the prismatic type or of the pouch type, and a pressing device. The pressing device comprises a first pressure plate and a second pressure plate configured to be arranged at each end of the battery cell stack, the plurality of battery cells being arranged stacked between the first pressure plate and the second pressure plate. The pressing device also comprises pressure elements fixed to the first pressure plate and to the second pressure plate, such that the distance between the first pressure plate and the second pressure plate may be variable. The pressure elements are manufactured from a shape memory alloy, such that the pressing device is expanded with an increase in the thickness of the battery cells and is compressed with a decrease in the thickness of the battery cells. The monitoring method is characterized by measuring the internal resistance or the stiffness of the pressure elements and determining the state of charge and/or the state of health of the battery cells based on said internal resistance or said stiffness.

In a fourth aspect, the invention also relates to a control method of a battery. The battery comprises a battery cell stack comprising a plurality of battery cells of the prismatic type or of the pouch type and a pressing device. The pressing device comprises a first pressure plate and a second pressure plate configured to be arranged at each end of the battery cell stack, the plurality of battery cells being arranged stacked between the first pressure plate and the second pressure plate. The pressing device comprises pressure elements fixed to the first pressure plate and to the second pressure plate, such that the distance between the first pressure plate and the second pressure plate may be variable. The pressure elements are manufactured from a shape memory alloy, such that the pressing device is expanded with an increase in the thickness of the battery cells and is compressed with a decrease in the thickness of the battery cells. The control method is characterized by adjusting the force exerted by the pressure elements on the battery cells by changing the temperature of said pressure elements.

Unlike pressing devices known in the state of the art, the pressing device of the invention exerts a constant force on the battery cells regardless of the expansion of the pressure element at any given time, thus improving the behavior of said battery cells throughout their entire life cycle and reducing their degradation.

These and other advantages and features of the invention will become apparent in view of the figures and detailed description of the invention.

### DESCRIPTION OF THE DRAWINGS

Figure 1 shows the superelastic behavior of a shape memory alloy on a diagram stress-temperature.
Figure 2 shows a stress-strain diagram of a shape memory alloy with superelastic behavior.
Figure 3 shows a three-dimensional stress-strain-temperature diagram for a shape memory alloy.
Figure 4 shows a perspective view of a first embodiment of the pressing device in a battery cell stack of the prismatic type.
Figure 5 shows a perspective view of a second embodiment of the pressing device in a battery cell stack of the prismatic type.
Figure 6 shows a perspective view of a third embodiment of the pressing device in a battery cell stack of the pouch type wherein the second pressure plate is not shown.
Figure 7 shows a perspective view of the embodiment of Figure 3 with the second pressure plate arranged in the pressing device.
Figure 8 shows a perspective view of a fourth embodiment of the pressing device in a battery cell stack of the pouch type wherein the second pressure plate is not shown.
Figure 9 shows a perspective view of the embodiment of Figure 5 with the second pressure plate arranged in the pressing device.
Figure 10 shows a schematic depiction of an embodiment of the control unit.

### DETAILED DISCLOSURE OF THE INVENTION

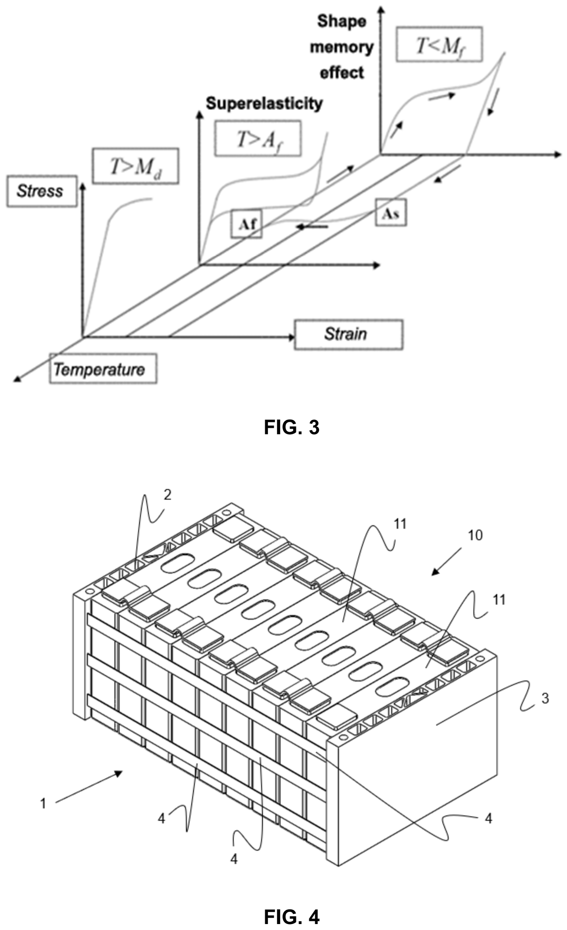

Figures 3 to 9 show four preferred embodiments of the pressing device 1 of the invention.

The pressing device 1 of the invention is a pressing device for a battery cell stack 10 comprising a plurality of battery cells 11 of the prismatic type or of the pouch type. The pressing device 1 comprises a first pressure plate 2 and a second pressure plate 3 configured to be arranged at each end of the battery cell stack 10, the plurality of battery cells 11 being arranged stacked between the first pressure plate 2 and the second pressure plate 3. The pressing device 1 comprises pressure elements 4, 5 fixed to the first pressure plate 2 and to the second pressure plate 3, such that the distance between the first pressure plate 2 and the second pressure plate 3 may be variable. The pressure elements 4, 5 are manufactured from a shape memory alloy and kept at a temperature greater than the final transformation temperature of the austenitic phase (A_{f}) of the shape memory alloy, such that the pressing device 1 is expanded with an increase in the thickness of the battery cells 11 and is compressed with a decrease in the thickness of the battery cells 11.

In electrical storage systems, battery cells are stacked forming a battery cell stack by placing the battery cells adjacent to each other in a stacking direction, and exerting pressure on same. The force or pressure exerted on the battery cells directly influences the efficiency and degradation of said battery cells, such that the more homogeneous the force exerted thereon throughout their entire life cycle is, the better their behavior and the less their degradation will be, achieving a battery cell stack that lasts longer.

However, battery cells tend to change in thickness due to different factors such as temperature, state of charge, or aging. On one hand, in each charge and discharge cycle, batteries increase and decrease in thickness respectively due to battery swelling, and on the other hand, they also swell as they age (the more usage cycles a battery cell has, the more swollen it will be). In the pressing device 1 of the invention, the first pressure plate 2 and the second pressure plate 3 are arranged at each end of the battery cell stack 10, such that the battery cells 11 are stacked between the first pressure plate 2 and the second pressure plate 3. The first pressure plate 2 is attached to the second pressure plate by means of the pressure elements 4, 5, which are fixed both to the first pressure plate 2 and to the second pressure plate 3 and are arranged longitudinally in the swelling direction of the battery cells 11, i.e., in the stacking direction of said battery cells 11. When the thickness of the battery cells 11 increases, said cells exert a mechanical load, i.e., a pressure on the first pressure plate 2 and the second pressure plate 3 which, since they are attached by the pressure elements 4, 5, cause the pressure elements 4, 5 to also be subjected to said mechanical load.

Shape memory alloys (SMA) are metal alloys which, after strain, are capable of recovering their original shape. This characteristic of shape memory alloys is due to the phase change referred to as martensitic transformation that takes place in said materials. Martensitic transformation is defined as a crystallographically reversible and instantaneous phase transformation, in which the atoms move in a coordinated manner like in shear mechanisms (Otsuka, K.; Wayman, C. (1999) Shape Memory Materials. Cambridge University Press, UK). The main characteristic of said shape memory alloys is their capacity to recover considerably large strains (of up to 8%) by means of the reversible transformation between phases (austenitic and martensitic). This transformation can be induced in two ways, either by stress, resulting in the superelastic property or superelastic effect of these materials; or by temperature, resulting in the shape memory effect.

The superelastic behavior, superelastic effect, or superelasticity is associated with the stress-induced martensitic transformation and results in a strain induced by the application of a mechanical load which is recoverable upon removing same, provided that the temperature is greater than A_{f}, which is the final temperature of the austenitic transformation. A superelastic strain cycle therefore begins at a temperature that is high enough for the stable phase to be the austenitic phase. The A_{f} temperature is a property of each shape memory alloy. As a result, for the shape memory alloy to exhibit the superelastic property, the pressure elements 4, 5 will be manufactured from a shape memory alloy the A_{f} of which is lower than the working temperature of the pressing device 1.

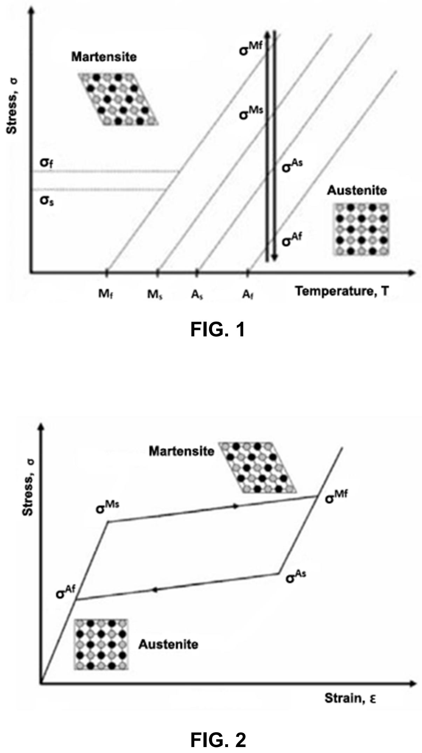

Figure 1 shows a typical stress-temperature curve of an SMA, wherein Mₛ, M_{f}, Aₛ and A_{f} represent the starting (s) and final (f) temperatures of the martensitic transformation (M), and the starting (s) and final (f) temperatures of the austenitic phase (A), respectively. As shown in Figure 2, if the temperature of the shape memory alloy is greater than A_{f}, starting from an austenitic structure, when a load is applied to it, it deforms until reaching a critical stress level σ^{Ms} at which the martensitic transformation starts, which will end upon reaching a stress level σ^{Mf}. Macroscopically, this martensitic transformation or conversion is characterized by a homogeneous strain of the shape memory alloy at a constant load for a given temperature, and at the rate at which the battery cells 11 expand. Upon removal of the load, once the material is in the martensitic phase, recovery from strain takes place until reaching a stress level below which the martensitic phase is thermodynamically unstable, σ^{As}, wherein nucleation of the austenitic phase begins. This reverse transformation is completed when stress level σ^{Af} is reached, resulting in the recovery of the original shape. This capacity of shape memory alloys to deform under stress, and to recover from said strain, when they are at a temperature greater than A_{f}, is known as superelastic behavior, superelastic effect, or superelasticity.

Unlike pressing devices known in the state of the art, the pressing device 1 of the invention, is characterized by exerting a constant force on the battery cells 11 regardless of the thickness thereof at any given time, thus improving the behavior of said battery cells 11 throughout their entire life cycle and reducing their degradation. This effect is due to the superelastic behavior of the pressure elements 4, 5 when said pressure elements are at a temperature greater than A_{f}, because they are manufactured from a shape memory alloy. To that end, initially, the pressure elements 4, 5 are assembled pre-stresses, ensuring that in the most compressed position of the battery cells 11, the pressure elements 4, 5 have started the martensitic transformation, i.e., they have a stress level between σ^{Ms} and σ^{Mf}. Therefore, during the charge cycle of the battery cells 11, wherein said battery cells swell, thereby increasing their thickness, the battery cells 11 exert a mechanical load on the pressure elements 4, 5, which, since they are manufactured from shape memory alloy, increase their strain, i.e., they stretch, but keeping their stress constant. Given that the pressure elements 4, 5 are fixed to the first pressure plate 2 and to the second pressure plate 3, the stress of the pressure elements 4, 5 causes the first pressure plate 2 and the second pressure plate 3 to exert a force on the battery cells 11, which is kept constant during the phase transformation.

Similarly, during the discharge cycle of the battery cells 11, wherein the thickness of said cells decreases, the inverse transformation in the shape effect alloy, from martensite to austenite, takes place, again exerting a constant force on the battery cells 11. The superelastic behavior of the alloy has certain hysteresis, such that the force exerted by the pressure elements 4, 5 may not be the same during the charge cycle of the battery cells 11 as during the discharge cycle of said battery cells 11, however, said force will be kept constant during the charge cycle and will also be kept constant during the discharge cycle.

In one embodiment of the invention, and so that the variation in the pressure exerted by the pressure elements 4, 5 on the battery cells 11 during a charge cycle and during a discharge cycle of the battery cells 11 is minimum, a shape memory alloy exhibiting minimum hysteresis will be used.

Thus, by means of the pressing device 1 of the invention, a constant force can be exerted on the battery cells 11 in a passive manner. Furthermore, the pressing device 1 of the invention is compact, occupies a very small space, and allows the battery cell stack 11 in which it is arranged to have a higher energy density than that of the pressure compensated battery cell stacks known in the state of the art. Moreover, the pressing device 1 allows solutions that are volumetrically identical to non-pressure compensated battery cell stacks, since it is not necessary to introduce any additional element between battery cells 11. Lastly, the pressing device 1 is cost-effective and easy to implement.

In one embodiment, the pressure elements 4, 5 exert a constant force when the pressing device is expanded or compressed. As described above, when a shape memory alloy is kept at a temperature greater than the final transformation temperature of the austenitic phase (A_{f}) of said shape memory alloy, for said temperature, the force exerted by the pressure elements 4, 5 on the battery cells 11 is a constant force.

In one embodiment, the pressing device 1 comprises control means to change the temperature of the pressure elements 4, 5 and thereby control the force exerted by the pressure elements 4, 5 on the battery cells 11. As described above, the pressure elements 4, 5 are manufactured from a shape memory alloy. While the temperature of said pressure elements 4, 5 is greater than A_{f}, said pressure elements 4, 5 will have a superelastic behavior. Furthermore, as shown in Figure 1, when the temperature of the pressure elements 4, 5 increases, the stress at which the constant-force transformation of said pressure elements 4, 5 takes place will be increased, whereas when the temperature of the pressure elements 4, 5 decreases, the stress at which the constant-force transformation thereof takes place will be decreased. Given that the stress of the pressure elements 4, 5 is translated into a force which said pressing device 1 exerts on the battery cells 11 through the first pressure plate 2 and the second pressure plate 3, by means of the pressing device 1 of the invention, the force exerted by the pressing device 1 on the battery cells 11 can be controlled in an active manner, such that said force can take the desired value for each specific implementation of the invention.

Some of the possible shape memory alloys that can be used in the pressing device 1 of the invention are described below. In one embodiment, the pressure elements 4, 5 are manufactured from a nickel-titanium (NiTi) alloy comprising 49 to 57% by weight of nickel.

In one embodiment, the pressure elements 4, 5 are manufactured from a nickel-titanium-copper (NiTiCu) alloy comprising 8 to 20% by weight of copper.

In one embodiment, the pressure elements 4, 5 are manufactured from a nickel-titanium-chromium (NiTiCr) alloy, with the weight of chromium being less than 1%.

In one embodiment, the pressure elements 4, 5 are manufactured from a nickel-titanium-cobalt (NiTiCo) alloy, with the weight of cobalt being less than 4%.

In one embodiment, the pressure elements 4, 5 are manufactured from a nickel-aluminum (NiAl) alloy comprising 36 to 38% by weight of aluminum.

In one embodiment, the pressure elements 4, 5 are manufactured from a nickel-titanium-palladium (NiTiPd) alloy comprising 0 to 40% by weight of nickel.

In one embodiment, the pressure elements 4, 5 are manufactured from a nickel-titanium-niobium (NiTiNb) alloy comprising 0 to 40% by weight of nickel.

In one embodiment, the pressure elements 4, 5 are manufactured from a copper-zinc (CuZn) alloy comprising 38.5 to 51.5% by weight of zinc.

In one embodiment, the pressure elements 4, 5 are manufactured from a copper-zinc (CuZn) alloy and a third element selected between silicon, tin, aluminum, or gallium.

In one embodiment, the pressure elements 4, 5 are manufactured from a copper-aluminum-nickel (CuAlNi) alloy comprising 28 to 29% by weight of aluminum and 3 to 4.5% by weight of nickel.

In one embodiment, the pressure elements 4, 5 are manufactured from a copper-aluminum-manganese (CuAlMn) alloy comprising 16 to 18% by weight of aluminum and 9 to 13% by weight of manganese.

In one embodiment, the pressure elements 4, 5 are manufactured from a copper-aluminum-beryllium (CuAlBe) alloy comprising 22 to 25% by weight of aluminum and 0.5 to 8% by weight of beryllium.

In one embodiment, the control means of the pressing device 1 comprise an internal resistance sensor, and a control unit 500 in communication with the internal resistance sensor, the internal resistance sensor being configured to measure the internal resistance of the pressure elements 4, 5 and to send same to the control unit, and with the control unit 500 being configured to determine the strain of the pressure elements 4, 5 based on the internal resistance of the pressure elements 4, 5. The resistivity of the pressure elements 4, 5 varies with their strain, and the correlation between both values for a specific shape memory alloy is known. Therefore, based on the measurement of resistivity of the pressure elements 4, 5, it is possible to determine the strain of said pressure elements 4, 5, i.e., how much they have been expanded or stretched, or how much they have been compressed or shrunken. By also knowing the strain of the pressure elements 4, 5, it is possible to know how much the thickness of the battery cells 11 has been increased.

In one embodiment, the control unit 500 is configured to determine the state of charge and/or the state of health or remaining life of the battery cells 11 based on said internal resistance. The correlation existing between the variation in the thickness of a battery cell 11 and its state of charge (or "SOC") and state of health (or "SOH") is known. Thus, by knowing the resistivity of the pressure elements 4, 5, it is possible to determine the state of charge of the battery cells 11 and/or the state of health of said battery cells 11 by means of the monitoring method of the invention. The paper *"*Experimental Characterization of Lithium-Ion Cell Strain Using Laser Sensors" in the publication Energies 2021, 14, 6281, https://doi.org/10.3390/en14196281*,* describes how it is possible to obtain said state of charge (or "SOC") and said state of health (or "SOH") based on the measurement of the thickness of a battery cell. Accordingly, the state of charge and the state of health of a battery cell are known to be determined from the thickness of the battery cell. However, it is possible to indirectly determine said state of charge and/or said state of health by means of the pressing device 1 of the invention by measuring the internal resistance of the pressure elements 4, 5 manufactured from shape memory alloy.

In one embodiment, the control unit 500 is configured to determine the force exerted at any given time on the battery cells 11 based on the internal resistance of the pressure elements 4, 5 and to change the temperature of the pressure elements 4, 5 based on said force. The ratio between the stress of the pressure elements 4, 5 and the strain of said pressure elements 4, 5 as a function of the temperature of said pressure elements 4, 5 is known. Therefore, from the measurement of the resistivity of the pressure elements 4, 5 it is possible to determine the stress of the pressure elements 4, 5 and the increase in temperature of the pressure elements 4, 5 to be carried out to regulate the pressure exerted on the battery cells 11 to the desired level. As a result, the pressure elements 4, 5 have a double function in the invention, because in addition to exerting a constant pressure on the battery cells 11, they allow selecting the pressure that is to be exerted on said battery cells 11.

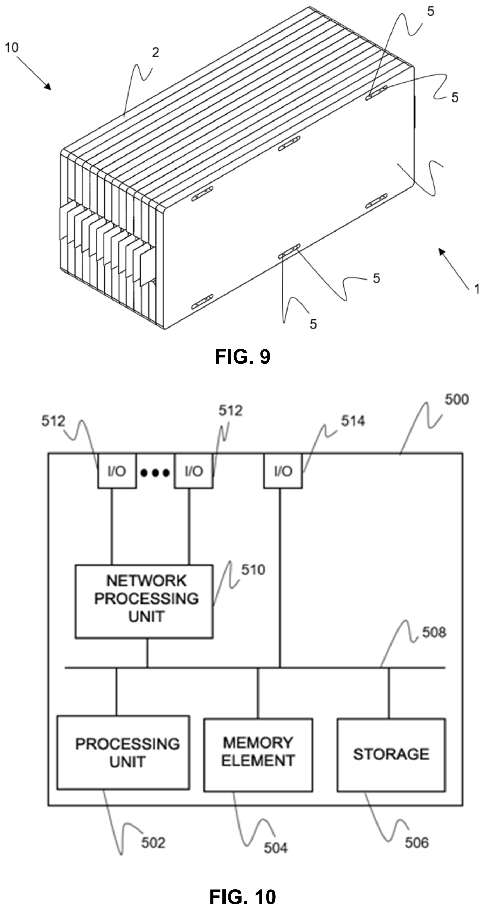

In one embodiment of the invention, the control unit 500 can include one or more processing units 502, one or more memory elements 504, a bus 508, one or more I/O interfaces 514 and a plurality of instructions which, when executed by the processing unit 502, make it possible for said processing unit 502 to determine the internal resistance of the pressure elements 4, 5 and the increase or decrease in temperature of the pressure elements 4, 5 to be carried out so that the pressure exerted on the battery cells 11 is the desired one. The control unit 500 can likewise include storage 506, one or more network processing units 510 interconnected with one or more network input/output (I/O) interfaces 512. Figure 10 shows a schematic depiction of an embodiment of the control unit 500.

In one embodiment in which the battery stack 10 is in a battery module of a battery pack, the control unit 500 is implemented in a battery management system (or "BMS"), either in the slave BMS or in the master BMS.

In one embodiment, the control means are configured to pass an electric current through the pressure elements 4, 5 in order to increase the temperature of the pressure elements 4, 5. In one embodiment, the two ends of the pressure elements 4, 5 are connected to two power supply cables, and it is possible to supply either current or voltage to said pressure elements 4, 5. Therefore, if current is supplied, the voltage would be read, and in contrast, if voltage is supplied, the current flowing through said pressure element 4, 5 would be read. By knowing both values, the internal resistance of the pressure element 4, 5 would be obtained.

In one embodiment, the control means are configured to shunt heat stored in a thermal management system associated with the battery cell stack 10 to the pressure elements 4, 5 in order to increase the temperature of the pressure elements 4, 5.

However, in other embodiments, it is possible to use other modes for increasing the temperature of the pressure elements 4, 5 based on the Peltier effect or by means of radiation, induction, etc.

In one embodiment, the pressure elements 4, 5 comprise a plurality of wires 5, plates 4, tubes preferably manufactured by means of extrusion, or straps, manufactured from shape memory alloy, with a first end of each wire 5, plate 4, tube or strap being fixed to the first pressure plate 2, and a second end of each wire 5, plate 4, tube or strap being fixed to the second pressure plate 3.

In one embodiment of the invention, the wires 5 or tubes have a section such that the diameter of the circle circumscribed in said section is equal to or less than 7 mm. In another embodiment, the section of the wires 5, plates 4, tubes, or straps is such that, considering the dimensions of said section on two perpendicular axes in the plane of said section, the minimum dimension of the section on one of said axes is less than 5 mm.

In one embodiment of the invention, the pressure elements 4, 5 comprise a plurality of wires 5 or tubes, said wires 5 or tubes passing through at least two pulleys. This allows having a wire 5 or tube of a length greater than the separation distance between the first pressure plate 2 and the second pressure plate 3. Therefore, in those cases in which the maximum strain allowable by the wire 5 or the tube is not sufficient because the swelling of the battery cells 11 requires a higher strain, by means of said system of pulleys or pulley guides, it is made possible that the separation distance between the first pressure plate 2 and the second pressure plate 3 is greater for a wire 5 or tube than when said pulleys are not used.

Figure 4 shows a first embodiment of the pressing device 1 of the invention. In said embodiment, the pressing device 1 is arranged in a battery cell stack 10 comprising a plurality of battery cells 11 of the prismatic type. The pressing device 1 comprises a first pressure plate 2 and a second pressure plate 3 arranged at each end of the battery cell stack 10, with the plurality of battery cells 11 being stacked between the first pressure plate 2 and the second pressure plate 3. The pressing device 1 comprises pressure elements 4 manufactured from a shape memory alloy and fixed to the first pressure plate 2 and to the second pressure plate 3. The pressure elements 4, 5 are kept at a temperature greater than the final transformation temperature of the austenitic phase (A_{f}) of the shape memory alloy, such that the pressing device 1 is expanded with an increase in the thickness of the battery cells 11 and is compressed with a decrease in the thickness of the battery cells 11, such that the distance between the first pressure plate 2 and the second pressure plate 3 may be variable.

In this first embodiment, the pressure elements 4 comprise a plurality of plates 4 manufactured from the shape memory alloy, with a first end of each plate 4 being fixed to the first pressure plate 2 and a second end of each plate 4 being fixed to the second pressure plate 3.

In the first embodiment, the pressing device 1 comprises six plates 4, such that three plates 4 are arranged on a first side of the battery cell stack 10, and three other plates 4 are arranged on a second side of the battery cell stack 1, with the first side and the second side being opposite sides of said battery cell stack 10. In other embodiments, the pressing device 1 could have one, two, or another number of plates 4 on each first and second side.

In the first embodiment, the terminals of the battery cells 11 of the prismatic type are all arranged on the same side of the battery cell stack 10. Taking into account the arrangement of the battery cells 11 in Figure 4, the terminals of the battery cells 11 are arranged on the upper side of the cell stack 10. Preferably, the plates 4 are arranged on opposite sides of the battery cell stack 10 in which the terminals of the battery cells 10 are not arranged, and specifically, taking into account the arrangement of the battery cells in Figure 4, three plates 4 are arranged on the left side, and three other plates 4 are arranged on the right side of the cell stack 10.

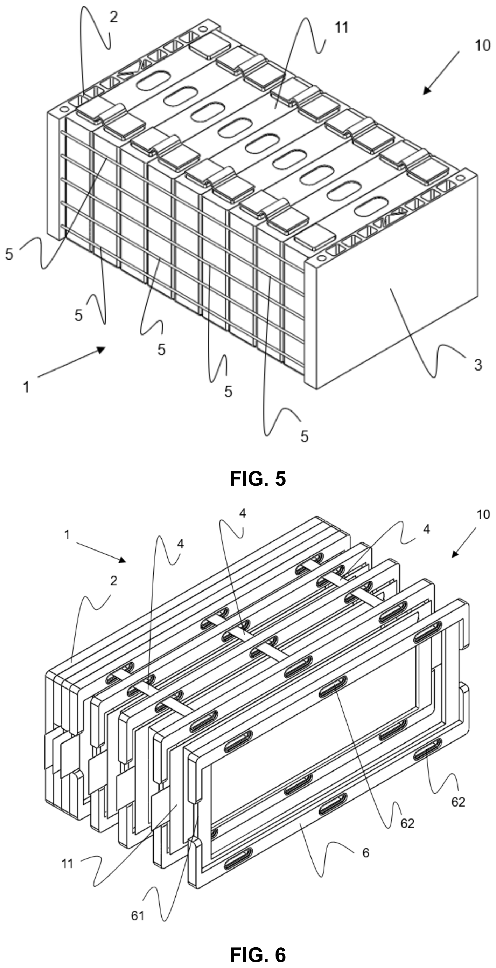

Figure 5 shows a second embodiment of the pressing device 1 of the invention, wherein the plates 4 of the first embodiment have been replaced with wires 5 also manufactured from a shape memory alloy.

In the second embodiment, the pressing device 1 comprises ten wires 5, such that five wires 5 are arranged on a first side of the battery cell stack 10, and five other wires 5 are arranged on a second side of the battery cell stack 1, with the first side and second side being opposite sides of said battery cell stack 10 in which the terminals of battery cells 11 are not arranged. In other embodiments, the pressing device 1 could have one, two, three, or another number of wires 5 on each of the first and second sides.

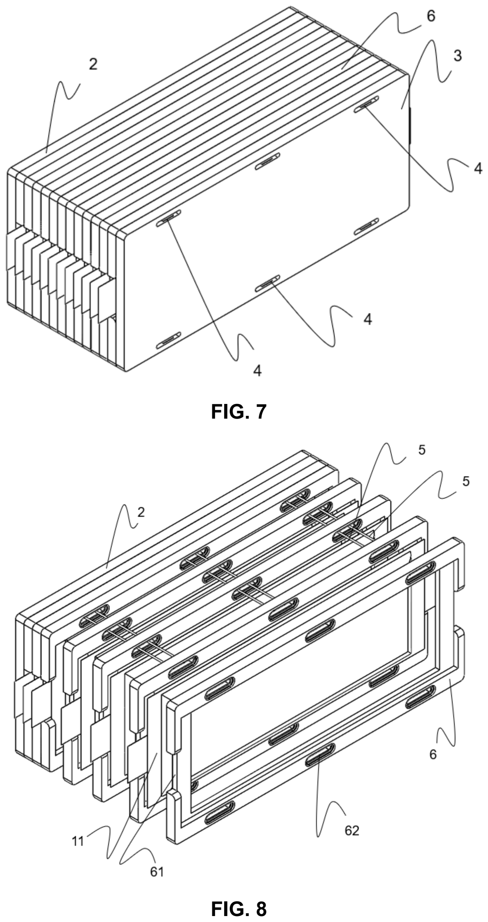

Figures 6 and 7 show a third embodiment of the pressing device 1 of the invention. In said embodiment, the pressing device 1 is arranged in a battery cell stack 10 comprising a plurality of battery cells 11 of the pouch type. The pressing device 1 comprises a first pressure plate 2 and a second pressure plate 3 arranged at each end of the battery cell stack 10, with the plurality of battery cells 11 being stacked between the first pressure plate 2 and the second pressure plate 3. The pressing device 1 comprises pressure elements 4 manufactured from a shape memory alloy and fixed to the first pressure plate 2 and to the second pressure plate 3. The pressure elements 4, 5 are kept at a temperature greater than the final transformation temperature of the austenitic phase (A_{f}) of the shape memory alloy, such that the pressing device 1 is expanded with an increase in the thickness of the battery cells 11 and is compressed with a decrease in the thickness of the battery cells 11, such that the distance between the first pressure plate 2 and the second pressure plate 3 may be variable. In this third embodiment, each battery cell 11 is arranged in a cartridge 6 acting as a separator between the battery cells 11, such that the terminals of each battery cell 11 project from the contour of said cartridge 6 through at least one opening 61 arranged on one of the sides of the cartridge 6 for such purpose.

In this third embodiment, the pressure elements 4 comprise a plurality of plates 4 manufactured from the shape memory alloy, with a first end of each plate 4 being fixed to the first pressure plate 2 and a second end of each plate 4 being fixed to the second pressure plate 3.

In the third embodiment, the pressing device 1 comprises six plates 4, such that three plates 4 are arranged on a first side of the battery cell stack 10 and three other plates 4 are arranged on a second side of the battery cell stack 1, with the first side and the second side being opposite sides of said battery cell stack 10. In other embodiments, the pressing device 1 could have one, two, or another number of plates 4 on each of the first and second sides.

In the third embodiment, the terminals of each battery cell 11 of the pouch type are arranged on opposite sides of each battery cell 10. In other embodiments, however, both terminals of each battery cell 11 can be arranged on the same side of the battery cell 11. Taking into account the arrangement of the battery cells 11 in Figure 3, the terminals of the battery cells 10 are arranged on the left side and on the right side of the cell stack 10. Preferably, the plates 4 are arranged on opposite sides of the battery cell stack 10 in which the terminals of the battery cells 11 are not arranged, and specifically, and taking into account the arrangement of the battery cells 11 in Figure 6, three plates 4 are arranged on the upper side and three other plates 4 are arranged in the lower side of the cell stack 10.

As shown in Figures 6 and 7, the cartridges 6 comprise a plurality of through holes 62 configured for the plates 4 to go through same, such that once the cell stack 10 together with the pressing device 1 of the invention is assembled, the plates 4 are housed inside the cartridges 6. In other embodiments, the plates 4 could be arranged on the outside of the cartridges 6.

Figures 8 and 9 show a fourth embodiment pressing device 1 of the invention, wherein the plates 4 of the third embodiment have been replaced with wires 5 also manufactured from a shape memory alloy.

In the fourth embodiment, the pressing device 1 comprises twelve wires 5, such that six wires 5 are arranged on a first side of the battery cell stack 10, and six other wires 5 are arranged on a second side of the battery cell stack 1, with the first side and the second side being opposite sides of said battery cell stack 10 in which the terminals of the battery cells 11 are not arranged, just like in the third embodiment of the invention. In other embodiments, the pressing device 1 could have another number of wires 5 on each of the first and second sides.

Just like in the third embodiment, the wires go through the through holes 62 of the cartridges 6, being housed inside the cartridges 6. In other embodiments, the wires 5 could be arranged on the outside of the cartridges 6.

In the fourth embodiment, a pair of wires 5 goes through each through hole 62. However, in other embodiments, one, three, or another number of wires 5 can go through each through hole 62.

When the pressure elements in the four embodiments described above are kept at a temperature greater than the final transformation temperature of the austenitic phase (A_{f}) of the shape memory alloy, the pressing device 1 is expanded with an increase in the thickness of the battery cells 11 and is compressed with a decrease in the thickness of the battery cells 11. Furthermore, for a specific temperature, the pressure elements 4, 5 exert a constant force on the battery cells 11 when the pressing device is expanded or compressed.

Furthermore, in the four embodiments, the pressing device comprises control means to change the temperature of the pressure elements 4, 5 and thereby control the force exerted by the pressure elements 4, 5, which allows determining the force that the pressure elements 4, 5 exert on the battery cells 11.

A second aspect of the invention relates to a pressing device 1 for a battery cell stack 10 comprising a plurality of battery cells 11 of the prismatic type or of the pouch type. The pressing device 1 comprises a first pressure plate 2 and a second pressure plate 3 configured to be arranged at each end of the battery cell stack 10, the plurality of battery cells 11 being arranged stacked between the first pressure plate 2 and the second pressure plate 3, and pressure elements 4, 5 fixed to the first pressure plate 2 and to the second pressure plate 3, such that the distance between the first pressure plate 2 and the second pressure plate 3 may be variable. The pressure elements 4, 5 are manufactured from a shape memory alloy and kept at a temperature lower than the final transformation temperature of the austenitic phase (A_{f}) of the shape memory alloy, such that the pressing device 1 is expanded with an increase in the thickness of the battery cells 11 and is compressed when the temperature of the pressure elements 4, 5 increases.

When the temperature of the pressure elements 4, 5 is less than A_{f}, the shape memory alloy has a behavior which is characterized in that the transformation between the austenitic and martensitic phases of the pressure elements 4, 5 is induced by temperature, resulting in the shape memory effect. The shape memory refers to the capacity of certain materials to "remember" a shape, even after severe strain. Once deformed at low temperatures (in their martensitic phase), these materials remain deformed until they are heated, at which time they return to the original shape they had before the strain.

Figure 3 shows a three-dimensional stress-strain-temperature diagram of a shape memory alloy, wherein the behavior of said shape memory alloy at different temperatures is observed. M_{d} is the highest temperature at which stress-induced martensite can be obtained, therefore, the temperatures at which stress-induced martensite can be obtained would be from Mₛ (starting temperatures of the martensitic transformation) to M_{d}. When the temperature is greater than M_{d}, the material behaves like a conventional metal, which is stressed to rupture. When the temperature is above A_{f} (final temperature of the austenitic phase) but below M_{d}, the material has a superelastic behavior, i.e., stress-induced martensite is generated, as described above in the application. Lastly, the end of the diagram shows the martensite strain below the temperature M_{f} (final temperature of the martensitic phase). Said strain is recovered between the Aₛ and A_{f} temperatures (starting and final temperatures of the austenitic phase, respectively) after the stress applied on the shape effect material has been removed, i.e., once the stress on said material disappears, by means of heating, the strain of the material would drop, i.e., it would be compressed.

In one embodiment, the pressure elements 4, 5 exert a constant force when the pressing device is expanded or compressed. As observed in Figure 3, when a shape memory alloy is kept at a temperature lower than the final transformation temperature of the austenitic phase (A_{f}) of said shape memory alloy, for said temperature, the force exerted by the pressure elements 4, 5 on the battery cells 11 is a constant force.

In one embodiment, the pressing device 1 comprises control means to change the temperature of the pressure elements 4, 5 and thereby control the force exerted by the pressure elements 4, 5.

It is known that when the shape memory alloy is at a temperature less than A_{f}, once the mechanical load applied on the shape memory alloy disappears, it is possible to recover from the strain of the shape memory alloy by increasing the temperature of said alloy up to the A_{f} value. In that sense, when the swelling of battery cells 11 is reduced in the discharge phase, decreasing the thickness thereof, the pressing device 1 of the invention allows controlling in an active manner the strain of the pressure elements 4, 5 once said pressure elements 4, 5 are no longer stressed due to the effect of the swelling of the battery cells 11, by means of an increase in the temperature of the pressure elements 4, 5. As shown in Figure 3, the strain, stress, and temperature of a shape memory alloy are related. The pressing device 1 can change the temperature of the pressure elements 4, 5 so that they have a strain such that the stress of said pressure elements 4, 5 remains constant over time. Since said stress is translated into the force that the pressing device 1 exerts on the battery cells, by means of the pressing device 1 of the invention the temperature of the pressure elements 4, 5 is changed such that the force exerted by the pressure elements 4, 5 on the battery cells 11 is constant. Furthermore, by changing the temperature of the pressure elements 4, 5, the force that said pressure elements 4, 5 exert on the battery cells 11 is modified. Therefore, not only do the pressure elements 4, 5 manage to exert a constant force on the battery cells 11, but also it is possible to determine the force that the pressure elements 4, 5 exert on the battery cells 11.

In one embodiment of the invention, the control means comprise an internal resistance sensor, and a control unit 500 in communication with the internal resistance sensor, with the internal resistance sensor being configured to measure the internal resistance of the pressure elements 4, 5 and to send same to the control unit, and with the control unit 500 being configured to determine the strain of the pressure elements 4, 5 based on the internal resistance measurement.

In one embodiment of the invention, the control unit 500 is configured to determine the force exerted at any given time on the battery cells 11 based on the internal resistance of the pressure elements 4, 5, and changing the temperature of the pressure elements 4, 5 based on said force.

In one embodiment of the invention, the control means are configured to pass an electric current through the pressure elements 4, 5 in order to increase the temperature of the pressure elements 4, 5.

In one embodiment of the invention, the control means are configured to shunt heat stored in a thermal management system associated with the battery cell stack 10 to the pressure elements 4, 5 in order to increase the temperature of the pressure elements 4, 5.

In one embodiment of the invention, the pressure elements 4, 5 comprise a plurality of wires 5 or plates 4 manufactured from shape memory alloy, with a first end of each wire 5 or plate 4 being fixed to the first pressure plate 2 and a second end of each wire 5 or plate 4 being fixed to the second pressure plate 3.

In one embodiment of the invention, the pressure elements 4, 5 comprise a plurality of wires 5, with said wires 5 passing through at least two pulleys.

The first, second, third, and fourth embodiments of the pressing device 1 of the invention are also applicable to this second aspect of the invention with the difference that in this case, the pressure elements 4, 5 are kept at a temperature lower than the final transformation temperature of the austenitic phase (A_{f}) of the shape memory alloy, such that the pressing device 1 is expanded with an increase in the thickness of the battery cells 11 and is compressed with an increase in the temperature of the pressure elements 4, 5. In this case also, for a specific temperature, the pressure elements 4, 5 exert a constant force on the battery cells 11 when the pressing device is expanded or compressed.

Furthermore, in the four embodiments, the pressing device comprises control means to change the temperature of the pressure elements 4, 5 and thereby control the force exerted by the pressure elements 4, 5, which allows determining the force that the pressure elements 4, 5 exert on the battery cells 11.

The technology used in the battery cells does not represent any limitation for the use of the pressing device of the invention, given that said pressing device can be used with lithium-ion battery cells, solid-state battery cells, or other types of battery cells in any format, i.e., prismatic, pouch type, etc.

Another aspect of the invention relates to a battery comprising a battery cell stack 10 comprising a plurality of battery cells 11 of the prismatic type or of the pouch type and a pressing device 1 according to the invention.

In a third aspect, the invention relates to a method of monitoring the charge level of a battery, the battery comprising a battery cell stack 10 comprising a plurality of battery cells 11 of the prismatic type or of the pouch type, and a pressing device 1. The pressing device 1 comprises a first pressure plate 2 and a second pressure plate 3 configured to be arranged at each end of the battery cell stack 10, the plurality of battery cells 11 being arranged stacked between the first pressure plate 2 and the second pressure plate 3, and pressure elements 4, 5 fixed to the first pressure plate 2 and to the second pressure plate 3, such that the distance between the first pressure plate 2 and the second pressure plate 3 may be variable. The pressure elements 4, 5 are manufactured from a shape memory alloy, such that the pressing device 1 is expanded with an increase in the thickness of the battery cells 11 and is compressed with a decrease in the thickness of the battery cells 11. The monitoring method is characterized by measuring the internal resistance of the pressure elements 4, 5 and determining the state of charge and/or the state of health of the battery cells 11 based on said internal resistance. The monitoring method of the invention is valid when the shape memory alloy is both above and below the final temperature of its austenitic phase (A_{f}).

The resistivity of the pressure elements 4, 5 varies with the strain of said elements, and the correlation between both values for a specific shape memory alloy is known. Therefore, based on the measurement of resistivity of the pressure elements 4, 5, it is possible to determine how much said pressure elements 4, 5 have been deformed, i.e., how much they have been expanded or stretched, or how much they have been compressed or shrunken. Likewise, by knowing how much the pressure elements 4, 5 have been deformed, it is possible to determine the variation in the thickness of the battery cells 11. Additionally, the correlation existing between the variation in the thickness of a battery cell 11 and its state of charge (or "SOC"), and state of health (or "SOH") is known. Thus, by knowing the resistivity of the pressure elements 4, 5, it is possible to determine the state of charge of the battery cells 11 and/or the state of health of said battery cells 11 by means of the monitoring method of the invention. The paper *"*Experimental Characterization of Lithium-Ion Cell Strain Using Lases Sensors" in the publication Energies 2021, 14, 6281. https://doi.org/10.3390/en14196281 describes how it is possible to obtain said state of charge (or "SOC"), and said state of health (or "SOH") based on the measurement of the thickness of a battery cell. Accordingly, the state of charge and the state of health of a battery cell are known to be determined from the thickness of the battery cell. However, the monitoring method of the invention allows determining said state of charge and/or said state of health indirectly by measuring the internal resistance of the pressure elements 4, 5 manufactured from the shape memory alloy.

In another embodiment, the monitoring method is characterized by measuring the stiffness of the pressure elements 4, 5 and determining the state of charge and/or the state of health of the battery cells 11 based on said stiffness. The stiffness is determined as the ratio between the force exerted by the pressure elements 4, 5 and the displacement of the battery cells 11 in a charge and discharge cycle.

In one embodiment of the method of monitoring, the voltage between the terminals of each battery cell 11 is measured and the state of charge and/or the state of health of the battery cells 11 is determined based on said voltage and on the internal resistance or the stiffness of the pressure elements 4, 5. The correlation between the voltage of a battery cell and its state of charge is also known. However, the voltage of a battery cell remains practically flat during a significant variation in the level of the state of charge, so the measurement of only the voltage does not allow a precise determination of said state of charge. The method of the invention allows obtaining a more precise measurement of the state of charge of the battery cells by combining the state of charge of the battery cells obtained from the reading of the voltage, and the state of charge obtained based on the measurement of the internal resistance of the pressure elements.

The method of monitoring the charge level of a battery of the invention is configured to be carried out in a battery with a battery cell stack 10 comprising a plurality of battery cells 11 of the prismatic type or of the pouch type, and a pressing device 1 according to the invention in any of its possible embodiments.

A fourth aspect of the invention relates to a control method of a battery comprising a battery cell stack 10 comprising a plurality of battery cells 11 of the prismatic type or of the pouch type and a pressing device 1 comprising a first pressure plate 2 and a second pressure plate 3 configured to be arranged at each end of the battery cell stack 10, the plurality of battery cells 11 being arranged stacked between the first pressure plate 2 and the second pressure plate 3, and pressure elements 4, 5 fixed to the first pressure plate 2 and to the second pressure plate 3, such that the distance between the first pressure plate 2 and the second pressure plate 3 may be variable, with the pressure elements 4, 5 being manufactured from a shape memory alloy, such that the pressing device 1 is expanded with an increase in the thickness of the battery cells 11 and is compressed with a decrease in the thickness of the battery cells 11. The control method adjusts the force exerted by the pressure elements 4, 5 on the battery cells 11 by changing the temperature of said pressure elements 4, 5.

Furthermore, as shown in Figure 1, it is known that when the shape memory alloy is kept at a temperature greater than the final transformation temperature of the austenitic phase (A_{f}) of the shape memory alloy, when the temperature of the pressure elements 4, 5 increases, the stress of said pressure elements 4, 5 will be increased, whereas when the temperature of the pressure elements 4, 5 decreases, the stress thereof will be decreased. Given that the stress of the pressure elements 4, 5 is translated into a force that said pressing device 1 exerts on the battery cells 11 through the first pressure plate 2 and the second pressure plate 3, the force exerted by the pressing device 1 on the battery cells 11 can be controlled in an active manner by means of the control method of the invention.

When the shape memory alloy is kept at a temperature lower than the final transformation temperature of the austenitic phase (A_{f}) of the alloy, when the temperature of the pressure elements 4, 5 increases, the strain of the pressure elements 4, 5 decreases, such that said pressure elements 4, 5 may exert a constant force on the battery cells 11. Likewise, when said temperature increases, it is possible to control the force exerted by the pressure elements 4, 5, which allows determining the force that the pressure elements 4, 5 exert on the battery cells 11.

In one embodiment of the control method of the invention, the temperature of the pressure elements 4, 5 is increased by passing an electric current through said pressure elements 4, 5.

The control method for a battery of the invention is configured to be carried out in a battery with a battery cell stack 10 comprising a plurality of battery cells 11 of the prismatic type or of the pouch type, and a pressing device 1 according to the invention in any of its possible embodiments.

## Claims

1. Pressing device for a battery cell stack (10) comprising a plurality of battery cells (11) of the prismatic type or of the pouch type, the pressing device (1) comprising:
- a first pressure plate (2) and a second pressure plate (3) configured to be arranged at each end of the battery cell stack (10), the plurality of battery cells (11) being arranged stacked between the first pressure plate (2) and the second pressure plate (3), and
- pressure elements (4, 5) fixed to the first pressure plate (2) and to the second pressure plate (3), such that the distance between the first pressure plate (2) and the second pressure plate (3) may be variable,
**characterized in that** the pressure elements (4, 5) are manufactured from a shape memory alloy and kept at a temperature greater than the final transformation temperature of the austenitic phase (A_{f}) of the shape memory alloy, such that the pressing device (1) is expanded with an increase in the thickness of the battery cells (11) and is compressed with a decrease in the thickness of the battery cells (11).

2. Pressing device according to claim 1, wherein the pressure elements (4, 5) exert a constant force when the pressing device is expanded or compressed.

3. Pressing device according to claim 1 or 2, comprising control means to change the temperature of the pressure elements (4, 5) and thereby control the force exerted by the pressure elements (4, 5).

4. Pressing device according to claim 3, wherein the control means comprise an internal resistance sensor, and a control unit (500) in communication with the internal resistance sensor, the internal resistance sensor being configured to measure the internal resistance of the pressure elements (4, 5) and to send same to the control unit, and the control unit (500) being configured to determine the strain of the pressure elements (4, 5) based on the internal resistance measurement.

5. Pressing device according to claim 4, wherein the control unit (500) is configured to determine the state of charge and/or the state of health of the battery cells (11) based on said internal resistance.

6. Pressing device according to claim 4, wherein the control unit (500) is configured to determine the force exerted at any given time on the battery cells (11) based on the internal resistance of the pressure elements (4, 5), and changing the temperature of the pressure elements (4, 5) based on said force.

7. Pressing device according to claim 6, wherein the control means are configured to pass an electric current through the pressure elements (4, 5) in order to increase the temperature of the pressure elements (4, 5).

8. Pressing device according to claim 6, wherein the control means are configured to shunt heat stored in a thermal management system associated with the battery cell stack (10) to the pressure elements (4, 5) in order to increase the temperature of the pressure elements (4, 5).

9. Pressing device according to any of the preceding claims, wherein the pressure elements (4, 5) comprise a plurality of wires (5) or plates (4) manufactured from the shape memory alloy, a first end of each wire (5) or plate (4) being fixed to the first pressure plate (2), and a second end of each wire (5) or plate (4) fixed to the second pressure plate (3).

10. Pressing device according to claim 9, wherein the pressure elements (4, 5) comprise a plurality of wires (5), said wires (5) passing through at least two pulleys.

11. Pressing device for a battery cell stack (10) comprising a plurality of battery cells (11) of the prismatic type or of the pouch type, the pressing device (1) comprising:
- a first pressure plate (2) and a second pressure plate (3) configured to be arranged at each end of the battery cell stack (10), the plurality of battery cells (11) being arranged stacked between the first pressure plate (2) and the second pressure plate (3), and
- pressure elements (4, 5) fixed to the first pressure plate (2) and to the second pressure plate (3), such that the distance between the first pressure plate (2) and the second pressure plate (3) may be variable,
**characterized in that** the pressure elements (4, 5) are manufactured from a shape memory alloy and kept at a temperature lower than the final transformation temperature of the austenitic phase (A_{f}) of the shape memory alloy, such that the pressing device (1) is expanded with an increase in the thickness of the battery cells (11) and is compressed when the temperature of the pressure elements (4, 5) increases.

12. Pressing device according to claim 11, wherein the pressure elements (4, 5) exert a constant force when the pressing device is expanded or compressed.

13. Pressing device according to claim 11 or 12, comprising control means to change the temperature of the pressure elements (4, 5) and thereby control the force exerted by the pressure elements (4, 5).

14. Pressing device according to claim 13, wherein the control means comprise an internal resistance sensor, and a control unit (500) in communication with the internal resistance sensor, the internal resistance sensor being configured to measure the internal resistance of the pressure elements (4, 5) and to send same to the control unit, and the control unit (500) being configured to determine the strain of the pressure elements (4, 5) based on the internal resistance measurement.

15. Pressing device according to claim 14, wherein the control unit (500) is configured to determine the force exerted at any given time on the battery cells (11) based on the internal resistance of the pressure elements (4, 5), and changing the temperature of the pressure elements (4, 5) based on said force.

16. Pressing device according to claim 15, wherein the control means are configured to pass an electric current through the pressure elements (4, 5) in order to increase the temperature of the pressure elements (4, 5).

17. Pressing device according to claim 15, wherein the control means are configured to shunt heat stored in a thermal management system associated with the battery cell stack (10) to the pressure elements (4, 5) in order to increase the temperature of the pressure elements (4, 5).

18. Pressing device according to any of claims 11 to 17, wherein the pressure elements (4, 5) comprise a plurality of wires (5) or plates (4) manufactured from the shape memory alloy, a first end of each wire (5) or plate (4) being fixed to the first pressure plate (2), and a second end of each wire (5) or plate (4) fixed to the second pressure plate (3).

19. Pressing device according to claim 18, wherein the pressure elements (4, 5) comprise a plurality of wires (5), said wires (5) passing through at least two pulleys.

20. Battery comprising a battery cell stack (10) comprising a plurality of battery cells (11) of the prismatic type or of the pouch type and a pressing device (1) according to any of the preceding claims.

21. Monitoring method for monitoring the charge level of a battery, the battery comprising a battery cell stack (10) comprising a plurality of battery cells (11) of the prismatic type or of the pouch type, and a pressing device (1) comprising
- a first pressure plate (2) and a second pressure plate (3) configured to be arranged at each end of the battery cell stack (10), the plurality of battery cells (11) being arranged stacked between the first pressure plate (2) and the second pressure plate (3), and
- pressure elements (4, 5) fixed to the first pressure plate (2) and to the second pressure plate (3), such that the distance between the first pressure plate (2) and the second pressure plate (3) may be variable,
the pressure elements (4, 5) being manufactured from a shape memory alloy, such that the pressing device (1) is expanded with an increase in the thickness of the battery cells (11) and is compressed with a decrease in the thickness of the battery cells (11), **characterized in that** the internal resistance or the stiffness of the pressure elements (4, 5) is measured and the state of charge and/or the state of health of the battery cells (11) is determined based on said internal resistance or said stiffness.

22. Monitoring method according to claim 21, wherein the voltage between the terminals of each battery cell (11) is measured and the state of charge and/or the state of health of the battery cells (11) is determined based on said voltage and on the internal resistance or the stiffness of the pressure elements (4, 5).

23. Control method of a battery comprising a battery cell stack (10) comprising a plurality of battery cells (11) of the prismatic type or of the pouch type and a pressing device (1) comprising
- a first pressure plate (2) and a second pressure plate (3) configured to be arranged at each end of the battery cell stack (10), the plurality of battery cells (11) being arranged stacked between the first pressure plate (2) and the second pressure plate (3), and
- pressure elements (4, 5) fixed to the first pressure plate (2) and to the second pressure plate (3), such that the distance between the first pressure plate (2) and the second pressure plate (3) may be variable,
the pressure elements (4, 5) being manufactured from a shape memory alloy, such that the pressing device (1) is expanded with an increase in the thickness of the battery cells (11) and is compressed with a decrease in the thickness of the battery cells (11), **characterized in that** the force exerted by the pressure elements (4, 5) on the battery cells (11) is adjusted by changing the temperature of said pressure elements (4, 5).

24. Control method according to claim 23, wherein the temperature of the pressure elements (4, 5) is increased by passing an electric current through said pressure elements (4, 5).
